# DEMANDE DE BREVET EUROPEEN

(11) **EP 1 729 188 A1**
(43) Date de publication de la demande: **06.12.2006**
(21) Numéro de dépôt: 05011587.2
(22) Date de dépôt: 30.05.2005
(51) Int. Cl.: G04C 13/11, H02K 1/14

(54) **Moteur de petites dimensions, notamment du type horloger**

(71) Demandeur: ETA SA Manufacture Horlogère Suisse, 2540 Grenchen (CH)
(72) Inventeur: Taghezout, Daho, 1110 Morges (CH)
(74) Mandataire: Surmely, Gérard

(57) **Abrégé**

Le moteur de petites dimensions, notamment du type horloger, présente un stator (4) avec une plaque de base (6) définissant une ouverture (18) pour le rotor (20). Une bobine non représentée est montée sur un noyau de bobine (8) qui présente à ses deux extrémités (26 et 28) des moyens de fixation à la plaque (6) définies par des parties saillantes (30, 32) en forme de queue d'aronde qui sont insérées par chassage dans des évidements complémentaires (38, 40) agencés dans la plaque (6). Le stator s'étend ainsi dans un seul et même plan général et est assemblé de manière rigide sans moyens de fixation auxiliaires, notamment des vis.

## Description

La présente invention concerne un moteur de petites dimensions, en particulier un moteur du type horloger ayant un rotor à aimant permanent et un stator formé par une partie plane définissant une ouverture pour le rotor et par au moins un noyau de bobine fixé à cette partie plane.

Dans le domaine horloger et généralement pour l'entraînement d'un affichage analogique, de nombreux moteurs de petites dimensions ont été réalisés. Un moteur monophasé bien connu de l'homme du métier est le moteur LAVET. Dans sa forme classique, ce moteur monophasé présente une plaque de base définissant une ouverture pour l'aimant permanent d'un rotor biphasé et un noyau de bobine dont les deux extrémités sont fixées à la plaque de base au moyen de vis en particulier. Les extrémités du noyau sont donc disposées sur la plaque de base. Le contact magnétique est effectué entre les deux surfaces planes du noyau et de la plaque de base située l'une en face de l'autre et mise en contact par les moyens de fixation. Pour des raisons de planéité et de rugosité de la surface notamment, un certain entrefer est généralement engendré entre les surfaces de contact. Pour atténuer cet effet, on augmente la dimension des surfaces de contact.

Bien que de conception relativement simple, les moteurs de type horloger s'étendent généralement au moins sur deux niveaux, les noyaux de bobine étant situés au-dessus de la plaque de base du moteur.

On notera que la plaque de base est de préférence formée par une seule et même pièce. Toutefois il est possible de prévoir plusieurs parties distinctes définissant chacune un pôle magnétique du stator entourant l'ouverture pour le rotor du moteur.

Le but de la présente invention est de proposer un moteur de petites dimensions, en particulier du type horloger, ayant un coût de fabrication réduit et dont le stator présente une épaisseur minimale.

A cet effet, l'invention concerne un moteur du type susmentionné et dont le stator comporte plusieurs parties planes, ce moteur étant caractérisé en ce que ces parties planes sont fixées entre elles par un chassage de saillies définies par ces parties planes dans des évidements périphériques complémentaires agencés également dans ces parties planes. Ces saillies présentent de préférence une forme en queue d'aronde.

Le moteur selon l'invention présente l'avantage de pouvoir s'étendre dans un seul et même plan général, les extrémités du noyau de bobine étant situées dans le même plan général que les autres parties du moteur, en particulier une plaque de base définissant l'ouverture pour le rotor. Ensuite, le montage du moteur nécessite aucun moyen de fixation distinct comme des vis ou goupilles. Finalement, un usinage précis des moyens de fixation en queue d'aronde permet d'obtenir une bonne pression aux surfaces de contact latéral entre les diverses parties et de diminuer ainsi les pertes de flux magnétique par effet d'entrefer.

La présente invention sera décrite ci-après de manière plus détaillée à l'aide de la description suivante faite en référence au dessin annexé, donné à titre d'exemple nullement limitatif, dans lequel :
- la figure 1 représente un moteur monophasé du type LAVET selon un premier mode de réalisation de l'invention ;
- la figure 2 représente schématiquement le stator d'un deuxième mode de réalisation d'un moteur selon l'invention ; et
- la figure 3 représente une variante de réalisation d'un moteur du type de la figure 2.

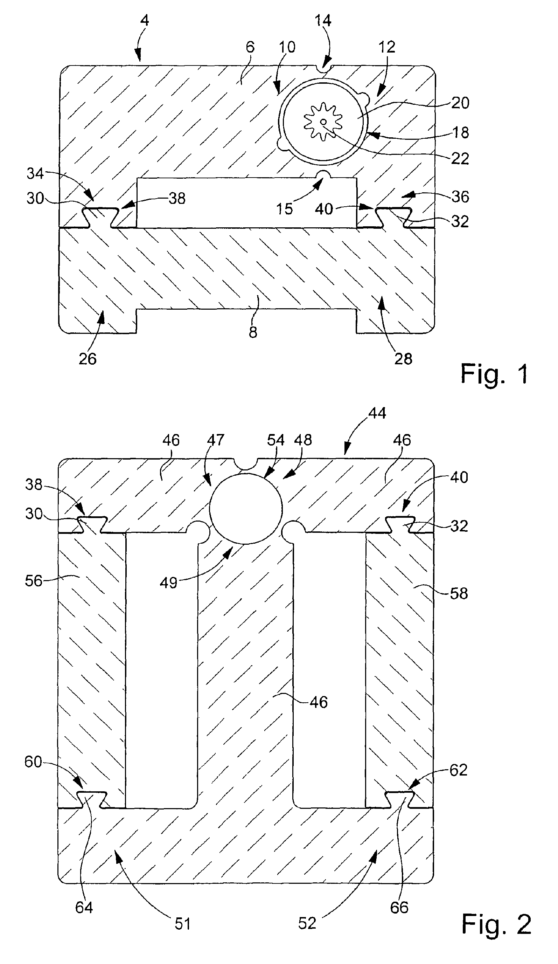

Le moteur monophasé de type LAVET représenté à la figure 1 de manière partielle, c'est-à-dire sans la bobine d'alimentation, comprend un stator 4 formé d'une plaque de base 6 et d'un noyau de bobine 8. La plaque de base définit deux pôles magnétiques 10 et 12 séparés par deux isthmes 14 et 15. Les deux pôles magnétiques définissant une ouverture 18 pour le rotor 20. Le rotor 20 comprend un aimant permanent bipolaire situé dans l'ouverture 18 et un pignon 22 d'entraînement d'un rouage ou mécanisme. Selon l'invention, le noyau 8 présente au niveau de ses deux parties d'extrémité 26 et 28 deux saillies 30 et 32 en forme de queue d'aronde. La plaque 6 présente dans les deux régions 34 et 36, faisant respectivement face aux extrémités 26 et 28 du noyau, des évidements périphériques complémentaires 38 et 40 dans lesquels sont chassées respectivement les deux saillies 30 et 32. II est évident que la bobine est montée autour de la partie centrale du noyau 8 avant la fixation de ce noyau à la plaque de base 6.

On notera que les saillies 30 peuvent présenter diverses formes similaires à celle de la queue d'aronde classique, c'est à dire exerçant une même fonction de fixation.

A la figure 2 est représenté un moteur électrique biphasé selon un deuxième mode de réalisation de l'invention. Le stator 44 de ce moteur comporte une plaque de base 46 définissant trois pôles magnétiques 47, 48 et 49. La partie de la plaque 46 définissant le pôle 49 présente deux branches 51 et 52. La plaque 46 définit une ouverture statorique 54 pour un rotor à aimant permanent non représenté ici. Le moteur comprend deux bobines d'alimentation (non représentées) portées respectivement par les deux noyaux 56 et 58. Chacun des noyaux comprend à une extrémité une saillie en queue d'aronde 30, 32 agencée dans des évidements périphériques complémentaires 38, 40, ces deux évidements étant respectivement agencés en bordure des parties de la plaque 46 définissant respectivement les pôles magnétiques 47 et 48. Chaque noyau présente à sa seconde extrémité un évidemment 60, 62 en forme de queue d'aronde dans lequel s'insère une saillie 64, respectivement 66 de la plaque de base 46.

Les noyaux 56 et 58 présentent une section sensiblement constante, exception faite de la saillie en queue d'aronde dont la section est inférieure, ce qui permet de monter sur le noyau des bobines préformées. On notera ici qu'une même réalisation est également possible dans le cadre du moteur monophasé représenté à la figure 1. Pour ce faire, les saillies en queue d'aronde sont prévues sur la plaque de base 6 et les évidements correspondant dans le noyau 8. De plus on peut prévoir une section constante sur toute la longueur du noyau 8 à l'exception des deux régions ayant les évidements où la section est inférieure. De ce fait, une bobine préformée peut également être glissée le long du noyau jusque dans une position centrale prévue pour le montage du noyau 8 à la plaque de base 6.

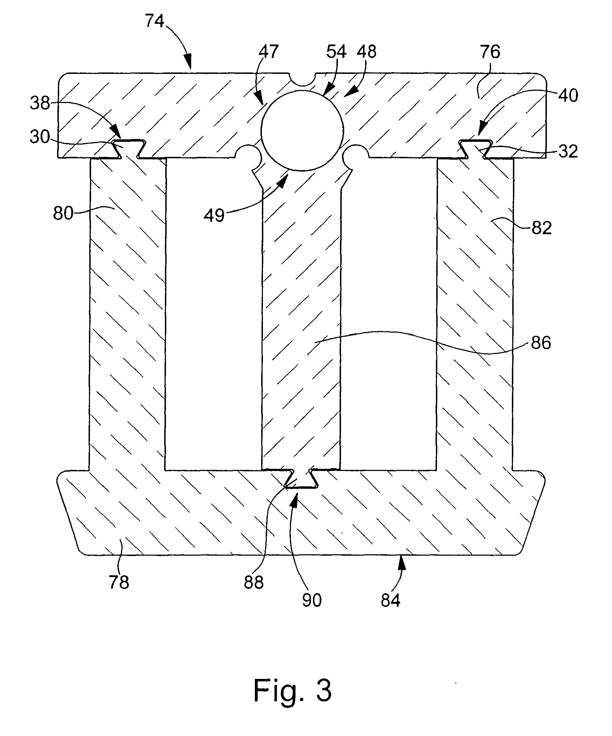

A la figure 3 est représentée une variante de réalisation d'un moteur biphasé du type de la figure 2. Le stator 74 comporte deux parties 76 et 78 situées dans un seul et même plan général. La partie 76 définit trois pôles magnétiques entourant l'ouverture 54 pour le rotor. La partie 76 présente trois bras qui s'étendent depuis l'ouverture 54 selon des directions décalées sensiblement de 90°. La partie 78 forme deux noyaux de bobine 80 et 82 reliés à une extrémité par une partie transversale 84. A leur extrémité libre, les deux noyaux 80 et 82 présentent chacun une saillie 30, 32 chassée dans un évidement correspondant 38, 40 de la pièce 76. Le bras central 86 de la partie 74 présente à son extrémité libre une saillie 88 en queue d'aronde qui est chassée dans une ouverture correspondante 90 agencée au centre de la partie transversale 84. Deux bobines préformées peuvent ainsi être montées respectivement sur les deux noyaux 80 et 82 et ensuite le stator est assemblé en chassant les trois saillies en queue d'aronde dans les évidements correspondants. On obtient ainsi un stator rigide qui s'étend dans un seul et même plan général.

## Revendications

1. Moteur de petites dimensions, notamment du type horloger, ayant un rotor (20) à aimant permanent et un stator (4; 44 ; 74), ce stator étant formé par plusieurs parties planes (6, 8 ; 46, 56, 58 ; 76, 78) définissant d'une part une ouverture (18 ; 54) pour ledit rotor et, d'autre part, au moins un noyau de bobine (8; 56, 58 ; 80, 82), **caractérisé en ce que** lesdites plusieurs parties planes sont fixées entre elles par un chassage de saillies, définies par ces parties planes, dans des évidements périphériques complémentaires de ces parties planes.

2. Moteur selon la revendication 1, **caractérisé en ce que** lesdites saillies servant à la fixation des plusieurs parties planes présentent sensiblement une forme en queue d'aronde.

3. Monteur selon la revendication 1 ou 2, **caractérisé en ce que** lesdites plusieurs parties planes s'étendent dans un seul et même plan général.
